# EUROPEAN PATENT APPLICATION

(11) **EP 2 538 663 A1**
(43) Date of publication of application: **26.12.2012**
(21) Application number: 11170483.9
(22) Date of filing: 20.06.2011
(51) Int. Cl.: H04N 5/28, H04N 5/265, H04N 5/272

(54) **Portable television platform**

(71) Applicant: Asociacion Centro de Tecnologias de Interaccion Visual y Comunicaciones Vicomtech, 20009 San Sebastian (ES)
(72) Inventor: Garcia olaizola igor, 20009 San Sebastian (ES); Laka inurrategi, maider, 20009 San sebastian (ES); Garcia leunda, Julen, 20009 San Sebastian (ES); Perez colmenar, jesus Mª, 20009 San Sebastian (ES)
(74) Representative: Isern-Jara, Nuria

(57) **Abstract**

It is especially conceived to provide a platform which is easy to transport, has low material and personnel costs, it is easy to operate, being implemented by a video inlet unit (1) and an audio inlet unit (3), to which video inlet unit a module is associated for video tracking objects, as well as a module for the integration of the GPS signals (8) connected to a 3D drive (17) having an storage unit (6), an audio/video signal filter (18) a video switch/mixer (9) and an audio switch/mixer (10), both governed by means of an operator interface in which the typical control elements are defined, such as joystick (11), keypad and mouse (12), MIDI interface (13) and the corresponding monitors (14), which switches/mixers are connected to an outlet unit (15).

## Description

### SUBJECT OF THE INVENTION

This invention refers to a portable television platform, easy to be installed and of a low cost, to carry out direct television production, starting from multiple high definition video signals and 3D graphic patterns, which platform is capable of using various automated elements for the interpretation of reality.

The subject matter of the invention is to provide a television platform to be used in the open air, with a low cost, both concerning to the infrastructure and to the personnel needed, without reduction in the quality of the production, with a simple layout, which permits the operation of the platform by means of a unique operator, or two operators at most.

### BACKGROUND TO THE INVENTION

As is well known, within the field of the practical application of the invention, television platforms are used in open air or external settings when the action which is to be covered is distant from the centre of operations or production of the television chain, being necessary to establish a network for communication with distant places.

This type of mobile platforms have a very complex layout, intervening a substantial number of hardware devices, which makes the platforms very costly and bulky, which negatively influences the "mobile" character of the platforms, being necessary a considerable number of operators for its control.

Thus, said platforms are expensive, complex, difficult to install, bulky and difficult to operate.

With the aim to solve these problems, US patent of invention 20090066846 describes a production kit which focuses on an ergonomic configuration of the equipments in order to facilitate the tasks of transport, installation and production. However, said document focuses on the design for packing the equipments, so that these latter are essentially those found in the above mentioned mobile platforms although less bulky, so that while the volume is reduced, the platform is still structurally complex and therefore expensive.

US patent 20100231101 describes a live television production system adopting the form of a case, that likewise the bigger systems has video and audio mixing boards, routers and patcheable panels. The portability of the whole equipment within a case is supported by the miniaturization of the electronics of the equipment.

None of the two above discussed cases permits to integrate information received from devices for measurement or follow up, nor to generate graphic patterns or 3D simulations in real time starting from those latter.

As a consequence no device is nowadays available which is capable to integrate in a unique system all the necessary operations for the television production corresponding to a quality sport event, with a reduced cost, high information coverage for the same deployment of cameras and including additional services as labeling and introduction of graphic patterns.

### DESCRIPTION OF THE INVENTION

The portable television platform provided by the invention gives a fully satisfactory solution to the above mentioned problems by means of a simple, economical device, with a reduced volume and which is easy to operate.

To obtain this objective, the platform of the invention provides a complete system for television production in an open air setting in which the action which has to be covered may be basically distant from the operation or production centre, requiring a network for communication with distant places. The system may be integrated in television headings and although it innovates the processes and forms to manage audiovisual contents, it is capable to maintain the conventional story-telling fashion and quality to which the television viewers are habituated.

Thus, the platform permits to manage at the same time multiple video and audio signals related to the event which is being transmitted.

At the same time, the system is capable to insert in real time graphic patterns, 3D simulations and signals captured by subjective cameras with the aim to improve the experience of the user.

To create the graphic patterns and 3D simulations in real time, the platform has a set of devices for the interpretation of reality.

In a more precise form, all the signals (video signals, graphic motives and 3D simulation videos) are integrated in a video, switch which may be operated by a unique operator by means of which all signals are monitorized. The 3D drive generates in real time and in an automatic form the 3D simulation and graphic patterns starting from the information obtained from the interpretation devices. This feature enrichens the broadcasted information which might be otherwise rather limited due to the low camera hiring resources to be found on the spot.

Concerning to the devices for the interpretation, this could be established in very different forms in function of the specific needs of each case, being foreseen as preferable an integration module for GPS signals and a module for video tracking objects.

The platform integrates a production board which output is constituted by a video signal which follows the present diffusion standards and which is integrable in the television headings.

Starting from said board, the operator selects the template to be broadcast. This template will comprise multiple video signals (one of which may be the 3D simulation signal) and informative graphic patterns.

The above mentioned platform will have tools for video edition, insertion of video effects and transitions.

The management is carried out by means of intuitive interfaces (keypad, joystick, production board, etc.)

The platform will additionally incorporate a storage unit to keep the video signals after processing, which permits to prepare later repetitions.

Therefore, the system permits to integrate all the informations captured on the spot and exhibits the same by means of an easily operable interface.

Starting from the above described arrangement, an easily transportable platform is obtained, with a reduced cost both from the hardware as well as from the personnel which is needed, as it is operable by one unique operator, this permitting to save a substantial quantity of hardware devices, avoiding at the same time the use of closed technologies so that the platform, by means of the reality interpretation devices, together with the simulator, permits to broaden the information coverage of the event, obtaining other views which in important events are usually obtained by means of especial vehicles such as helicopters, twin hulled boats, etc.

### DESCRIPTION OF THE DRAWINGS

To complement the description which is being carried out and in order to enhance a better understanding of the features of the invention, according to a practical preferred embodiment of the same, a sheet of drawings is annexed which is deemed to form part of the description, showing in an illustrative and non limitative character the following:

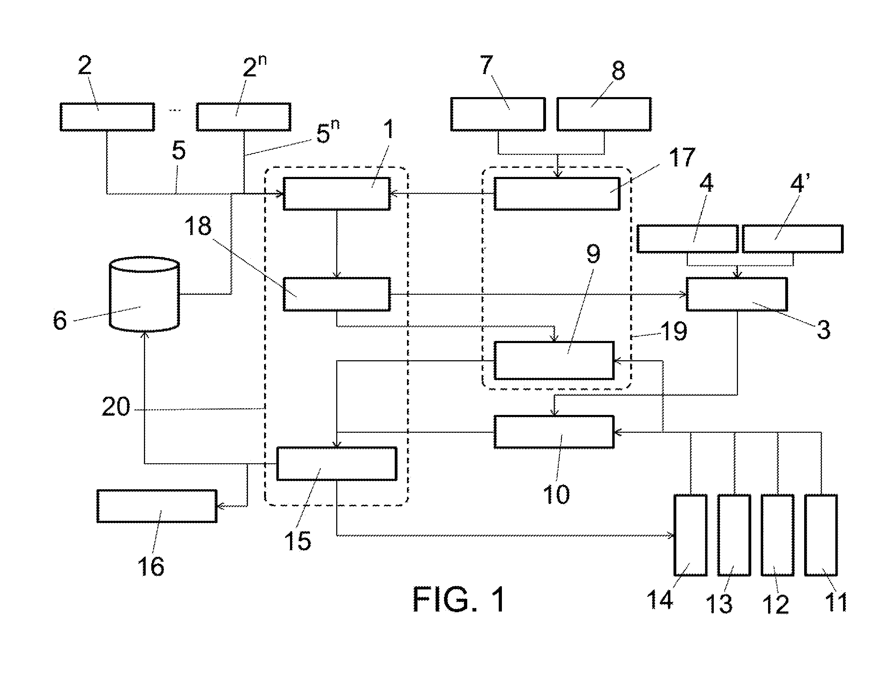

Figure 1.- A diagrammatic block illustration of the elements which form part of a portable television platform according to the present invention.

### PREFERRED EMBODIMENT OF THE INVENTION

As is to be observed in the drawing, the platform is defined by a video inlet unit 1 for the incoming of the signals from multiple video cameras 2...2ⁿ, as well as those originating in the corresponding interpretation devices, and one audio inlet 3 to which the corresponding microphones 4...4ⁿ will be connected, as well as the audio signals 5...5ⁿ coming from the video cameras 2...2ⁿ, which video inlet unit will be associated to a storage unit 6 by means of which both incoming and outcoming signals will be stored.

The interpretation devices to be connected to the video inlet unit 1, may vary in function of the particular needs for each case, however it has been preferably foreseen that said devices be implemented in a module for the video tracking of objects, assisted by the corresponding video camera 7, as well as a module for the integration of GPS signals 8 both elements being connected to a 3D drive 17.

The radio inlet unit 1 will be connected to an audio/video filter 18, so that the video signals will be sent to a video switch/mixer 9 while the audio signals will be sent by means of the audio inlet 3 to an audio switch/mixer 10, both elements being governed through an operator interface in which the typical control elements will be defined, such as a joystick 11, keypad and mouse 12, MIDI interface 13 and the corresponding monitors 14.

The video and audio switches/mixers 9-10 will be finally connected to an outlet unit 15, which outlet signal will be backfed to the monitors 14 to permit to visualize the final result of the production, which will be output to the main broadcast center 16 of the corresponding television chain.

The 3D drive 17 together with the video mixer 9 will be integrated in a graphic card 19 while the audio inlets and outlets will be integrated altogether in a capture device 20.

## Claims

1. Portable television platform **characterized in that** it is comprised of a video inlet unit (1) and an audio inlet unit (3), which radio inlet unit (1) permits the incoming of the signals from the video cameras (2...2ⁿ) and also from the corresponding interpretation devices, preferably implemented in a module for the video tracking of objects assisted by the corresponding video camera (7) as well as a GPS signal integration module (8), being both elements connected to a 3D drive (17), which radio inlet unit is associated to a storage unit (6) and connected to an audio/video filter (18) through which the video signals are sent to a video switch/mixer (9) and the audio signals are routed by means of the audio inlet (3) to an audio switch/mixer (10), being both elements governed through an operator interface in which the typical control elements are defined, such as a joystick (11), keypad and mouse (12), MIDI interface (13) and the corresponding monitors (14) with the peculiarity that both video and audio switches/mixers (9-10) are connected to an outlet unit (15), which outlet signal is readdressed to the monitors (14) for the visualization of the final result of the production.

2. Portable television platform, according to claim 1, **characterized in that** the 3D drive (17) together with the video mixer (9) are integrated in a graphic card (19) while the audio and video inlets and outlets are integrated altogether in a capture device (20).
